# FASCICULE DE BREVET EUROPEEN

(11) **EP 4 544 210 B1**
(45) Date de publication et mention de la délivrance du brevet: **11.02.2026**
(21) Numéro de dépôt: 23736789.1
(22) Date de dépôt: 15.06.2023
(51) Int. Cl.: F16L 3/18, F16L 3/21

(54) **DISPOSITIF DE GUIDAGE AMORTISSANT D'UNE TUYAUTERIE**
VORRICHTUNG ZUR SCHWINGUNGSDÄMPFENDEN FÜHRUNG VON ROHRLEITUNGEN
DEVICE FOR VIBRATION-DAMPING GUIDANCE OF PIPING

(30) Priorité: 22.06.2022 FR 2206159
(43) Date de publication de la demande: 30.04.2025
(73) Titulaire: Safran Aerosystems, 78370 Plaisir (FR)
(72) Inventeur: ROCHE, Jean-François, 77550 MOISSY CRAMAYEL (FR); WOIRET, Jérémy, 77550 MOISSY CRAMAYEL (FR)
(74) Mandataire: Casalonga
(86) Numéro de dépôt international: PCT/FR2023/050871
(87) Numéro de publication internationale: WO 2023/247864

(56) Documents cités:
- DE-A1- 102007 052 701
- KR-B1- 101 932 030
- KR-B1- 101 932 030
- US-A- 3 856 245

## Description

### Domaine technique

La présente invention concerne le domaine des boîtes à ressort utilisées dans les tuyauteries industrielles.

En particulier, la présente invention concerne les dispositifs de guidage de tuyauteries permettant d'absorber les vibrations pouvant user les tuyauteries, et en particulier les tuyauteries d'aéronef, de navire ou de sous-marin.

De manière générale, l'invention s'applique à tous les dispositifs de guidage amortissant pour tuyauterie.

### Techniques antérieures

Le guidage et le support d'une tuyauterie sont généralement réalisés par une liaison pivot dans laquelle un tuyau de la tuyauterie passe longitudinalement selon un degré de liberté longitudinal dans un anneau de frottement relié à un support.

Le document KR 101 932 030 B1 divulgue un example de dispositif de guidage et de support d'une tuyauterie.

Le tuyau et l'anneau sont généralement soumis à des frottements dus au déplacement longitudinal du tuyau dans l'anneau. Les conditions de frottement sont généralement réduites à des couples de matière métalmétal, métal-tissu en polytétrafluoroéthylène, ou encore métal-silicone.

En fonctionnement, autrement dit en condition d'utilisation prenant en compte les tolérances de montage, les effets de dilatation thermique et les effets vibratoires, on observe généralement une usure des surfaces en contact du tuyau et de l'anneau entraînant des pertes de performances à l'effort, et à l'amortissement.

Un ressort à spirale peut généralement être monté à proximité de la liaison pivot afin de permettre l'amortissement de la tuyauterie face à des vibrations dont l'axe est parallèle à l'axe longitudinal du ressort.

Cependant, l'usure de l'anneau reste importante, notamment lors de vibrations sous résonnance.

### Exposé de l'invention

La présente invention a donc pour but de pallier les inconvénients précités et de fournir un dispositif de guidage de tuyauterie à la fois performant dans l'amortissement des vibrations et de fabrication simple.

La présente invention a pour objet un dispositif de guidage d'une tuyauterie, le dispositif comprenant un palier réalisé dans un matériau à faible coefficient de frottement et configuré pour cercler un tuyau de la tuyauterie, un insert encapsulant radialement le palier, au moins un moyen élastique entourant radialement l'insert et une coque positionnée autour du palier, du moyen élastique et de l'insert.

On entend par coefficient de frottement le rapport entre l'effort tangentiel et l'effort normal appliqué sur les surfaces du palier. En particulier, on entend par faible coefficient de frottement un coefficient de frottement inférieur aux coefficients de frottement des matériaux usuellement utilisés pour la réalisation de tuyauterie. Par exemple, le coefficient de frottement du matériau dans lequel est réalisé le palier est inférieur à 0,25, préférentiellement inférieur à 0,15.

Ainsi, le palier permet une usure moindre et permet en particulier de réduire les contraintes de fatigue oligo-cyclique (« lowcycle fatigue » en termes anglo-saxons) ainsi que les contraintes vibratoires (« high-cycle fatigue » en termes anglo-saxons), également atténuées par la présence du moyen élastique qui permet en particulier de garantir un deuxième degré de liberté radial en addition du degré de liberté longitudinal.

Dans un mode de réalisation, le moyen élastique comprend un ressort à lame ondulée.

Avantageusement, le palier, l'insert et la coque comprennent chacun au moins deux éléments de sorte que le démontage du dispositif de guidage est réalisable sans démontage de la tuyauterie.

Dans un mode de réalisation, l'insert est réalisé dans un matériau métallique et comprend des gorges configurées pour loger des agrafes métalliques configurées pour relier les deux éléments de l'insert.

Les agrafes métalliques permettent de maintenir fixes les deux éléments de l'insert l'un par rapport à l'autre, le maintien étant par exemple obtenu par soudage des agrafes métalliques sur les deux éléments de l'insert.

Dans un mode de réalisation particulier, la coque est réalisée dans un matériau métallique et comprend une surface centrale tubulaire configurée pour être au moins partiellement au contact du moyen élastique, et deux épaulements annulaires prolongeant les extrémités longitudinales de la surface centrale tubulaire vers l'axe longitudinal du dispositif de guidage et de la tuyauterie, les deux épaulements annulaires étant configurés pour maintenir longitudinalement le palier, le moyen élastique et l'insert.

Avantageusement, le dispositif comprend un premier support et un second support comprenant chacun une partie annulaire et une partie plane radiale configurée pour être positionnée radialement sur la coque, les parties annulaires des premier et second supports comprenant des moyens de fixation réversibles à la coque.

Dans un mode de réalisation particulier, les épaulements annulaires de la coque comprennent des protubérances régulièrement espacées comprenant chacune un angle de manière à former des gouttières configurées pour coopérer avec les moyens de fixation des parties annulaires des premier et second supports, lesdits moyens de fixation comprenant une alternance d'évidements et de languettes dans les parties annulaires de sorte que les supports sont configurés pour être fixés à la coque par insertion des protubérances dans les évidements puis rotation des languettes dans les gouttières.

Avantageusement, le dispositif comprend une attache comprenant une partie radiale configurée pour être fixée contre la partie plane radiale du premier support et/ou du second support et une butée configurée pour être positionnée entre deux protubérances de manière à bloquer la rotation du premier et/ou du second support par rapport à la coque.

Avantageusement, le palier comprend du graphite fritté.

La présente invention a également pour objet une tuyauterie comprenant un tuyau et un dispositif de guidage tel que défini précédemment.

La présente invention a également pour objet un procédé d'installation et/ou d'assemblage d'un dispositif de guidage tel que défini précédemment et/ou d'une tuyauterie telle que définie précédemment, caractérisé en ce qu'il comprend les étapes suivantes :
- Cerclage d'un tuyau de ladite tuyauterie par le palier ;
- Mise en place de l'insert radialement autour du palier ;
- Mise en place du moyen élastique radialement autour de l'insert ; et
- Positionnement de la coque autour du palier, du moyen élastique et de l'insert.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue schématique assemblée d'un dispositif de guidage d'une tuyauterie selon l'invention ;
[Fig 2] est une vue schématique des différentes étapes du procédé d'installation et/ou d'assemblage d'un dispositif de guidage d'une tuyauterie selon l'invention ;
[Fig 3]
   et

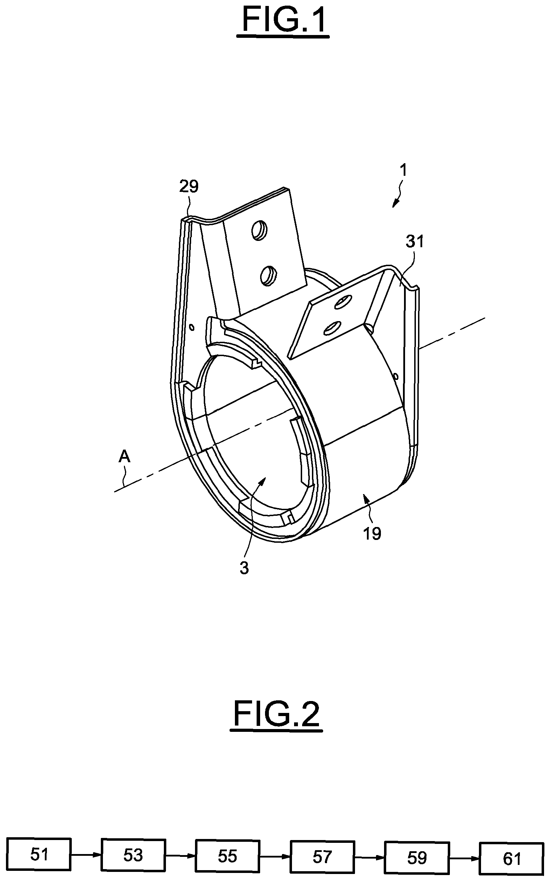

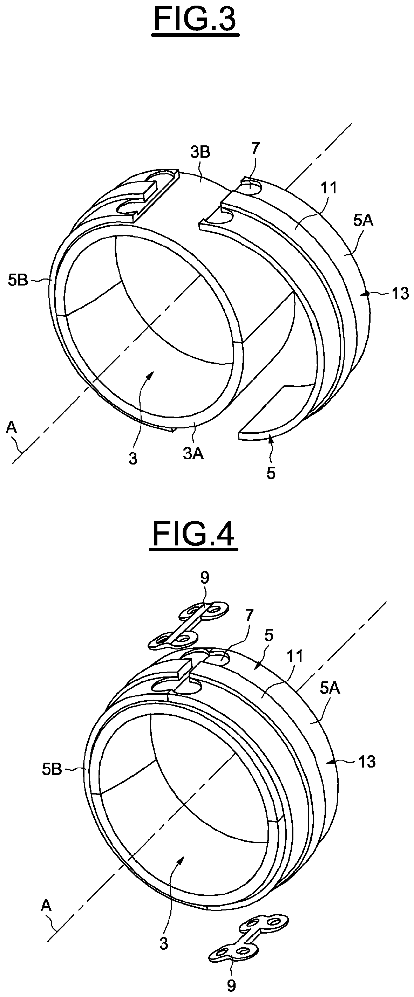

[Fig 4] sont des vues schématiques du dispositif de guidage de la figure 1 lors d'une étape d'assemblage d'un insert ;

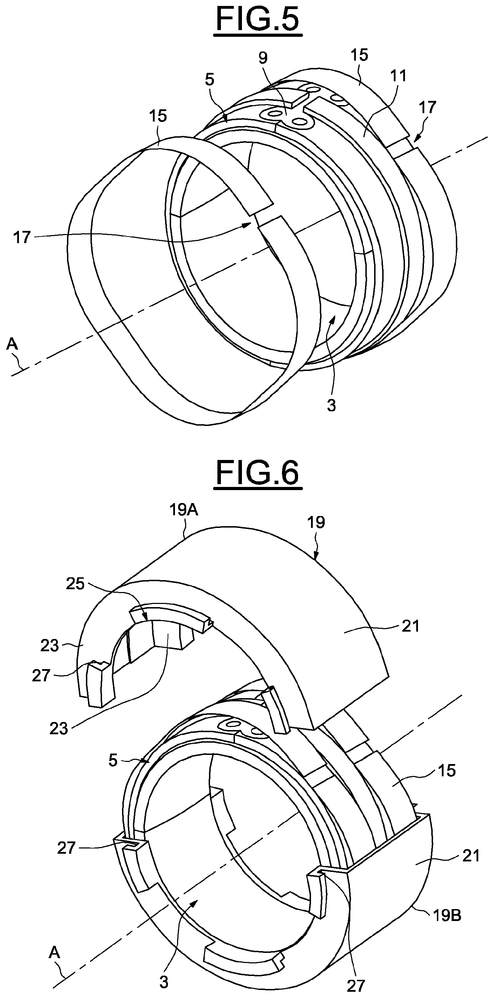

[Fig 5] est une vue schématique du dispositif de guidage de la figure 1 lors d'une étape d'assemblage d'un moyen élastique ;
[Fig 6] est une vue schématique du dispositif de guidage de la figure 1 lors d'une étape d'assemblage d'une coque ;

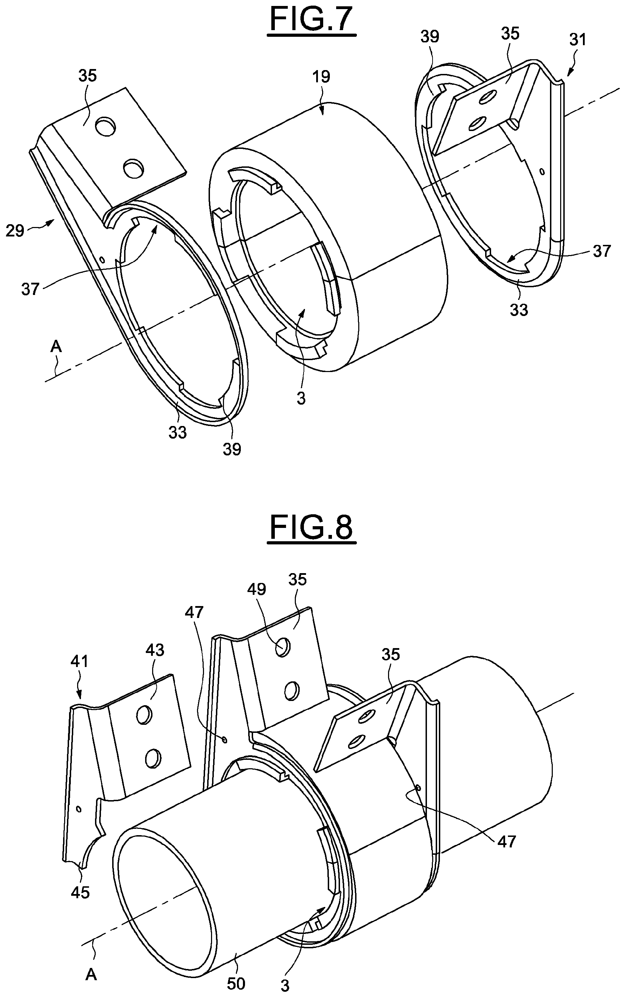

[Fig 7] est une vue schématique du dispositif de guidage de la figure 1 lors d'une étape d'assemblage de supports ; et
[Fig 8] est une vue schématique du dispositif de guidage de la figure 1 lors d'une étape d'assemblage d'une attache.

### Exposé détaillé d'au moins un mode de réalisation

On a représenté schématiquement sur la figure 1 un mode de réalisation d'un dispositif de guidage 1 d'une tuyauterie selon l'invention. La figure 1 illustre un mode de réalisation dans lequel le dispositif de guidage 1 est assemblé.

On a par ailleurs représenté schématiquement sur la figure 2 les étapes d'un mode de mise en œuvre du procédé d'installation et/ou d'assemblage du dispositif de guidage 1 de la figure 1.

Des visuels schématiques des différentes étapes dudit procédé sont représentés aux figures 3 à 8 suivantes.

Le dispositif de guidage 1 comprend un palier 3 réalisé dans un matériau à faible coefficient de frottement. Le palier 3 est configuré pour venir cercler un tuyau (non représenté) de la tuyauterie. Lorsque le tuyau est tubulaire, le palier 3 est donc annulaire et en contact constant avec ledit tuyau. Il sert de pièce d'usure. En particulier, le palier 3 forme un corps, par exemple une poudre, entre le palier 3 et le tuyau lors d'une période de rodage après installation du palier 3 autour du tuyau, le corps formant ainsi un lubrifiant solide et assurant la lubrification entre le palier 3 et le tuyau.

En particulier, le palier 3 comprend un matériau à faible coefficient de frottement tel que du graphite fritté. Le graphite est particulièrement adapté car il présente un faible coefficient de frottement, possède de bonnes propriétés d'amortissement et peut s'user plus facilement que le matériau utilisé pour la fabrication des tuyaux de la tuyauterie, il sert ainsi de pièce d'usure.

Le palier 3 permet donc de conférer au tuyau un degré de liberté longitudinal selon l'axe longitudinal A du palier 3 et de la tuyauterie, et un degré de liberté radial conféré par la matière du palier 3.

Dans un mode de réalisation particulier, le palier 3 est réalisé en deux éléments 3A et 3B, par exemple deux éléments de type demi-anneau. Ainsi, le montage et le démontage d'un palier 3, et plus généralement du dispositif de guidage 1, est facilité et réalisable sans démontage du reste de la tuyauterie. Cette caractéristique est notamment utile dans un souci d'efficacité de la maintenance et permet dans le cas d'une usure du dispositif de guidage 1, de ne changer que le palier 3 usé par un palier 3 neuf. Il n'est ainsi pas nécessaire de changer toute la tuyauterie. Le palier 3 est remplaçable aisément et permet d'accroître et d'optimiser la capacité de réparation du dispositif de guidage et, par conséquence, de diminuer significativement le nombre de pièces mises au rebut et pouvant être difficilement recyclables.

Le dispositif de guidage 1 comprend en outre un insert 5 venant se positionner radialement autour du palier 3. L'insert 5 est semblable à un anneau et est visible sur la figure 3.

L'insert 5 comprend par exemple deux éléments 5A et 5B, par exemple deux éléments de type demi-anneau. Ainsi, comme énoncé précédemment, le montage et le démontage de l'insert 5, et plus généralement du dispositif de guidage 1, est facilité et réalisable sans démontage du reste de la tuyauterie.

Optionnellement, l'insert 5 est réalisé dans un matériau métallique et comprend au moins des gorges 7 configurées pour loger des agrafes 9 métalliques. Les gorges 7 sont par exemple pratiquées aux extrémités des deux éléments 5A et 5B. Dans ce mode de réalisation, l'insert 5 comprend des agrafes 9 métalliques représentées sur la figure 4 et logées dans les gorges 7 de manière à relier les deux éléments 5A et 5B ensemble. Par exemple, une agrafe 9 relie les gorges 7 de deux éléments 5A et 5B. Les agrafes 9 sont par exemple soudées aux éléments de l'insert 5 par soudure bouchon.

L'insert 5 comprend également un rail annulaire central 11 sur sa surface extérieure 13 permettant de rigidifier et de positionner ledit insert 5.

Le dispositif de guidage 1 comprend également un moyen élastique 15 entourant radialement l'insert 5. Le moyen élastique 15 comprend par exemple une mousse élastique et/ou un élément annulaire en caoutchouc. De préférence, le moyen élastique comprend un ressort 15 à lame ondulée représenté sur les figures 5 et 6.

Dans le mode de réalisation représenté sur les figures 5 et 6, le dispositif de guidage 1 comprend deux ressorts 15 à lame ondulée entourant radialement l'insert 5. Les ressorts 15 à lame sont positionnés de part et d'autre du rail annulaire central 11 de l'insert 5, le rail annulaire central 11 permettant de loger les ressorts 15 à lame sans que ces derniers ne se déplacent selon l'axe longitudinal A.

Le ou les ressorts 15 à lames utilisés sont par exemple sensiblement ondulés, ou en forme d'étoile, de sorte que certaines portions des ressorts 15 à lame sont en contact radial avec l'insert 5 et certaines portions ne le sont pas, permettant un amortissement des mouvements radiaux des tuyaux de la tuyauterie.

Avantageusement, le ou les ressorts 15 à lame comprennent une ouverture 17 permettant de les insérer directement sur l'insert 5 sans démontage total de la tuyauterie.

Le dispositif de guidage 1 comprend également une coque 19 positionnée autour du palier 3, de l'insert 5 et du moyen élastique 15. La coque 19 est par exemple représentée sur la figure 6.

La coque 19 est par exemple réalisée dans un matériau métallique.

La coque 19 comprend une surface centrale tubulaire 21 dont la partie interne est configurée pour être au moins partiellement au contact du moyen élastique 15. Ainsi, le moyen élastique 15, par exemple le ressort à lame, est positionné dans un espace entre l'insert 5 et la coque 19 et permet d'amortir certains mouvements radiaux d'un tuyau au sein dudit espace.

La coque 19 comprend en outre deux épaulements annulaires 23 prolongeant les extrémités longitudinales de la surface centrale tubulaire 21 vers l'axe longitudinal A du dispositif de guidage 1. Cependant, les dimensions des épaulements annulaires 23 sont déterminées de sorte que seul le palier 3 est en contact avec un tuyau de la tuyauterie. En particulier, les deux épaulements annulaires 23 sont configurés pour maintenir longitudinalement le palier 3, l'insert 5 et le moyen élastique 15 lorsque le dispositif de guidage 1 est assemblé.

Dans le mode de réalisation représenté sur la figure 6, la coque 19 comprend deux éléments 19A et 19B de sorte que le démontage du dispositif de guidage 1 est réalisable sans le démontage total de la tuyauterie.

De plus, les épaulements annulaires 23 de la coque 19 comprennent des protubérances 25 régulièrement espacées, par exemple quatre protubérances 25 réparties sur le périmètre formé par un épaulement annulaire 23, chaque protubérance 25 comprenant un angle de manière à former une gouttière 27 ouverte vers l'extrémité radiale de la coque 19.

Le dispositif de guidage 1 peut également comprendre un premier support 29 et un second support 31 représentés sur la figure 7. Le premier support 29 et le second support 31 comprennent chacun une partie annulaire 33 et une partie plane radiale 35 configurée pour être positionnée radialement du côté extérieur à la surface centrale tubulaire 21. Les parties annulaires 33 comprennent en outre des moyens de fixation 37 et 39 à la coque 19, les moyens de fixation étant réversibles.

Les moyens de fixation comprennent une alternance d'évidements 37 et de languettes 39 positionnés radialement à l'intérieur des parties annulaires 33.

Les premier et second supports 29 et 31 sont fixés à la coque 19 par insertion des protubérances 25 de la coque 19 dans les évidements 37 des supports 29 et 31, puis par rotation des languettes 39 des supports dans les gouttières 27 de la coque 19.

Les supports 29 et 31 permettent ainsi de fixer le dispositif de guidage 1 à un élément extérieur et également de garantir que les deux éléments 19A et 19B de la coque 19 sont maintenus assemblés.

Optionnellement, le dispositif de guidage 1 comprend une attache 41 représentée à la figure 8. L'attache 41 comprend une partie radiale 43 configurée pour être fixée contre la partie plane radiale 35 du premier support 29 et/ou du second support 31. L'attache 41 comprend également une butée 45 configurée pour être positionnée entre deux protubérances 25 de manière à bloquer la rotation du ou des supports sur lesquels l'attache 41 est fixée par rapport à la coque 19. L'attache 41 permet ainsi de garantir que le premier et/ou le second support 29 et 31 ne peuvent pas se détacher.

Afin de faciliter l'assemblage de l'attache 41, l'attache 41 et le premier et/ou le second support 29 et 31 comprennent chacun une lumière 47 afin d'y faire passer un fil frein.

Les parties planes radiales 35 et la partie radiale 43 comprennent également au moins un orifice 49 destiné à accueillir un élément de fixation (non représenté) permettant la fixation de l'attache 41 aux supports et/ou permettant la fixation des supports 29 et 31 à un élément extérieur.

Dans différentes variantes du mode de réalisation illustré, les deux supports 29 et 31 sont fixés de part et d'autre d'une même attache 41, ou le premier support 29 est fixé à une attache 41, tandis que le second support 31 est fixé à une deuxième attache. La figure 1 représente le dispositif de guidage 1 assemblé et dans lequel le second support 31 est encore laissé libre, et peut être fixé à l'attache 41 avec le premier support 29 ou peut être fixé à une deuxième attache.

Comme évoqué précédemment, on a représenté schématiquement sur la figure 2 les étapes d'un mode de mise en œuvre du procédé d'installation et/ou d'assemblage du dispositif de guidage 1 de la figure 1.

Pour l'assemblage du dispositif de guidage 1 et son installation autour d'un tuyau 50 (représenté sur la figure 8) d'une tuyauterie, on effectue en premier lieu une étape 51 de cerclage dudit tuyau par le palier 3. Plus précisément, on positionne les deux éléments 3A et 3B du palier 3 autour du tuyau de manière à former un anneau.

Puis, on effectue une étape 53 de mise en place de l'insert 5 radialement autour du palier 3. Cette étape 53 est notamment illustrée par les figures 3 et 4.

Ensuite, on effectue une étape 55 de mise en place du moyen élastique 15 radialement autour de l'insert 5. Cette étape 55 est illustrée par la figure 5.

Afin de maintenir ces différents éléments, on positionne dans une étape 57 la coque 19 autour du palier 3, de l'insert 5 et du moyen élastique 15. Cette étape 57 est illustrée par la figure 6.

Dans le cas de la présence de supports 29 et 31, on effectue leur mise en place lors d'une étape 59. Cette étape 59 est illustrée par la figure 7 et comprend l'insertion des protubérances 25 de la coque 19 dans les évidements 37 des supports 29, puis la rotation des languettes 39 des supports dans les gouttières 27 de la coque 19.

Enfin on effectue une étape 61 de fixation d'au moins une attache 41 à au moins un support 29 et/ou 31. Cette étape 61 est illustrée par la figure 8.

La présente invention est particulièrement applicable dans le cadre de tuyauteries soumises à des vibrations importantes, tel que dans des aéronefs, par exemple dans des moteurs d'aéronefs, ou encore dans des navires ou des sous-marins.

## Revendications

1. Dispositif de guidage (1) d'une tuyauterie, **caractérisé en ce qu'**il comprend un palier (3) réalisé dans un matériau à faible coefficient de frottement et configuré pour cercler un tuyau de la tuyauterie, un insert (5) encapsulant radialement le palier (3), au moins un moyen élastique (15) entourant radialement l'insert (5), et une coque (19) positionnée autour du palier (3), du moyen élastique (15) et de l'insert (5), le dispositif de guidage étant **caractérisé en ce que** le palier (3), l'insert (5) et la coque (19) comprennent chacun au moins deux éléments (5A ; 5B) de sorte que le démontage du dispositif de guidage (1) est réalisable sans démontage de la tuyauterie.

2. Dispositif selon la revendication 1, dans lequel l'insert (5) est réalisé dans un matériau métallique et comprend des gorges (7) configurées pour loger des agrafes (9) métalliques configurées pour relier les deux éléments (5A ; 5B) de l'insert (5).

3. Dispositif selon l'une des revendications 1 et 2, dans lequel la coque (19) est réalisée dans un matériau métallique et comprend une surface centrale tubulaire (21) configurée pour être au moins partiellement au contact du moyen élastique (15), et deux épaulements annulaires (23) prolongeant les extrémités longitudinales de la surface centrale tubulaire (21) vers l'axe longitudinal (A) du dispositif de guidage (1) et de la tuyauterie, les deux épaulements annulaires (23) étant configurés pour maintenir longitudinalement le palier (3), le moyen élastique (15) et l'insert (5).

4. Dispositif selon l'une quelconque des revendications 1 à 3, comprenant un premier support (29) et un second support (31) comprenant chacun une partie annulaire (33) et une partie plane radiale (35) configurée pour être positionnée radialement sur la coque (19), les parties annulaires (33) des premier et second supports (29 ; 31) comprenant des moyens de fixation (37 ; 39) réversibles à la coque (19).

5. Dispositif selon la revendication 4, dans lequel les épaulements annulaires (23) de la coque (19) comprennent des protubérances (25) régulièrement espacées comprenant chacune un angle de manière à former des gouttières (27) configurées pour coopérer avec les moyens de fixation (37 ; 39) des parties annulaires (33) des premier et second supports (29 ; 31), lesdits moyens de fixation (37 ; 39) comprenant une alternance d'évidements (37) et de languettes (39) dans les parties annulaires (33) de sorte que les supports (29 ; 31) sont configurés pour être fixés à la coque (19) par insertion des protubérances (25) dans les évidements (37) puis rotation des languettes (39) dans les gouttières (27).

6. Dispositif selon la revendication 5, comprenant une attache (41) comprenant une partie radiale (43) configurée pour être fixée contre la partie plane radiale (35) du premier support (29) et/ou du second support (31) et une butée (45) configurée pour être positionnée entre deux protubérances (25) de manière à bloquer la rotation du premier et/ou du second support (29 ; 31) par rapport à la coque (19).

7. Dispositif selon l'une quelconque des revendications 1 à 6, dans lequel le palier (3) comprend du graphite fritté.

8. Tuyauterie comprenant un tuyau (50) et un dispositif de guidage (1) selon l'une quelconque des revendications 1 à 7.

9. Procédé d'installation et/ou d'assemblage d'un dispositif de guidage (1) selon l'une quelconque des revendications 1 à 7 et/ou d'une tuyauterie selon la revendication 8, **caractérisé en ce qu'**il comprend les étapes suivantes :
- Cerclage (étape 51) d'un tuyau de ladite tuyauterie par le palier (3) ;
- Mise en place de l'insert (5) radialement autour du palier (3) (étape 53) ;
- Mise en place du moyen élastique (15) radialement autour de l'insert (5) (étape 55) ; et
- Positionnement de la coque (19) autour du palier (3), du moyen élastique (15) et de l'insert (5) (étape 57).

## Patentansprüche

1. Führungsvorrichtung (1) einer Rohrleitung, **dadurch gekennzeichnet, dass** sie ein Lager (3), das aus einem Material mit niedrigem Reibungskoeffizienten hergestellt und so eingerichtet ist, dass es ein Rohr der Rohrleitung umschließt, ein Einsatz (5), der das Lager (3) radial umschließt, mindestens ein elastisches Mittel (15), das den Einsatz (5) radial umschließt, und eine Schale (19) umfasst, die um das Lager (3), das elastische Mittel (15) und den Einsatz (5) positioniert ist, wobei die Führungsvorrichtung **dadurch gekennzeichnet ist, dass** das Lager (3), der Einsatz (5) und die Schale (19) jeweils mindestens zwei Elemente (5A; 5B) umfassen, so dass die Demontage der Führungsvorrichtung (1) ohne Demontage der Rohrleitung durchführbar ist.

2. Vorrichtung nach Anspruch 1, wobei der Einsatz (5) aus einem Metallmaterial hergestellt ist und Nuten (7) umfasst, die so eingerichtet sind, dass sie Metallklammern (9) aufnehmen, die so eingerichtet sind, dass sie die beiden Elemente (5A; 5B) des Einsatzes (5) verbinden.

3. Vorrichtung nach einem der Ansprüche 1 und 2, wobei die Schale (19) aus einem Metallmaterial hergestellt ist und eine rohrförmige Mittelfläche (21) umfasst, die so eingerichtet ist, dass sie mindestens teilweise mit dem elastischen Mittel (15) in Kontakt ist, und zwei ringförmige Schultern (23), die die Längsenden der rohrförmigen Mittelfläche (21) in Richtung der Längsachse (A) der Führungsvorrichtung (1) und der Rohrleitung verlängern, wobei die beiden ringförmigen Schultern (23) so eingerichtet sind, dass sie das Lager (3), das elastische Mittel (15) und den Einsatz (5) in Längsrichtung halten.

4. Vorrichtung nach einem der Ansprüche 1 bis 3, umfassend einen ersten Träger (29) und einen zweiten Träger (31), der jeweils einen ringförmigen Teil (33) und einen radial flachen Teil (35) umfasst, der so eingerichtet ist, dass er radial auf der Schale (19) positioniert ist, wobei die ringförmigen Teile (33) des ersten und des zweiten Trägers (29; 31) umkehrbare Befestigungsmittel (37; 39) an der Schale (19) umfassen.

5. Vorrichtung nach Anspruch 4, wobei die ringförmigen Schultern (23) der Schale (19) gleichmäßig beabstandete Vorsprünge (25) umfassen, die jeweils einen Winkel umfassen, um Rinnen (27) zu bilden, die so eingerichtet sind, dass sie mit den Befestigungsmitteln (37; 39) der ringförmigen Teile (33) des ersten und des zweiten Trägers (29; 31) zusammenwirken, wobei die Befestigungsmittel (37; 39) abwechselnd Aussparungen (37) und Laschen (39) in den ringförmigen Teilen (33) umfassen, so dass die Träger (29; 31) so eingerichtet sind, dass sie durch Einführen der Vorsprünge (25) in die Aussparungen (37) und anschließendes Drehen der Laschen (39) in den Rinnen (27) an der Schale (19) befestigt werden.

6. Vorrichtung nach Anspruch 5, umfassend eine Befestigung (41), die einen radialen Teil (43) umfasst, der so eingerichtet ist, dass er an dem radialen flachen Teil (35) des ersten Trägers (29) und/oder des zweiten Trägers (31) befestigt ist, und einen Anschlag (45), der so eingerichtet ist, dass er zwischen zwei Vorsprüngen (25) positioniert ist, um die Drehung des ersten und/oder des zweiten Trägers (29; 31) in Bezug auf die Schale (19) zu blockieren.

7. Vorrichtung nach einem der Ansprüche 1 bis 6, wobei das Lager (3) gesintertes Graphit umfasst.

8. Rohrleitung, umfassend ein Rohr (50) und eine Führungsvorrichtung (1) nach einem der Ansprüche 1 bis 7.

9. Verfahren zur Installation und/oder Montage einer Führungsvorrichtung (1) nach einem der Ansprüche 1 bis 7 und/oder einer Rohrleitung nach Anspruch 8, **dadurch gekennzeichnet, dass** es folgende Schritte umfasst:
- Umreifen (Schritt 51) eines Rohrs der Rohrleitung durch das Lager (3);
- Anbringen des Einsatzes (5) radial um das Lager (3) (Schritt 53);
- Anbringen des elastischen Mittels (15) radial um den Einsatz (5) (Schritt 55); und
- Positionieren der Schale (19) um das Lager (3), das elastische Mittel (15) und den Einsatz (5) (Schritt 57).

## Claims

1. A device (1) for guiding a piping, **characterised in that** it comprises a bearing (3) made of a material with a low coefficient of friction and configured to encircle a pipe of the piping, an insert (5) radially encapsulating the bearing (3), at least one elastic means (15) radially surrounding the insert (5), and a shell (19) positioned around the bearing (3), the elastic means (15) and the insert (5), the guide device being **characterised in that** the bearing (3), the insert (5) and the shell (19) each comprise at least two elements (5A; 5B) so that disassembling the guide device (1) could be carried out without disassembling the piping.

2. The device according to claim 1, wherein the insert (5) is made of a metal material and comprises grooves (7) configured to accommodate metal staples (9) configured to connect the two elements (5A; 5B) of the insert (5).

3. The device according to one of claims 1 and 2, wherein the shell (19) is made of a metal material and comprises a tubular central surface (21) configured to be at least partially in contact with the elastic means (15), and two annular shoulders (23) extending from the longitudinal ends of the tubular central surface (21) towards the longitudinal axis (A) of the guide device (1) and of the piping, the two annular shoulders (23) being configured to longitudinally hold the bearing (3), the elastic means (15) and the insert (5).

4. The device according to any one of claims 1 to 3, comprising a first support (29) and a second support (31) each comprising an annular portion (33) and a radial planar portion (35) configured to be positioned radially on the shell (19), the annular portions (33) of the first and second supports (29; 31) comprising means (37; 39) for reversible fastening to the shell (19).

5. The device according to claim 4, wherein the annular shoulders (23) of the shell (19) comprise evenly spaced protuberances (25) each comprising an angle so as to form gutters (27) configured to cooperate with the fastening means (37; 39) of the annular portions (33) of the first and second supports (29; 31), said fastening means (37; 39) comprising alternating recesses (37) and tabs (39) in the annular portions (33) so that the supports (29; 31) are configured to be fastened to the shell (19) by inserting the protuberances (25) into the recesses (37) and then rotating the tabs (39) in the gutters (27).

6. The device according to claim 5, comprising an attachment (41) comprising a radial portion (43) configured to be fastened against the radial planar portion (35) of the first support (29) and/or of the second support (31) and a stop (45) configured to be positioned between two protuberances (25) so as to block rotation of the first and/or second support (29; 31) relative to the shell (19).

7. The device according to any one of claims 1 to 6, wherein the bearing (3) comprises sintered graphite.

8. A piping comprising a pipe (50) and a guide device (1) according to any one of claims 1 to 7.

9. A method for installing and/or assembling a guide device (1) according to any one of claims 1 to 7 and/or a piping according to claim 8, **characterised in that** it comprises the following steps:
- Encircling (step 51) a pipe of said piping with the bearing (3);
- Placing the insert (5) radially around the bearing (3) (step 53);
- Placing the elastic means (15) radially around the insert (5) (step 55); and
- Positioning the shell (19) around the bearing (3), the elastic means (15) and the insert (5) (step 57).
